# FASCICULE DE BREVET EUROPEEN

(11) **EP 3 168 087 B1**
(45) Date de publication et mention de la délivrance du brevet: **31.07.2019**
(21) Numéro de dépôt: 16193855.0
(22) Date de dépôt: 14.10.2016
(51) Int. Cl.: B60R 19/18

(54) **PARTIE ARRIERE DE VEHICULE DIMENSIONNEE POUR LE CHOC**
HINTERER FAHRZEUGTEIL, DER FÜR DEN AUFPRALL DIMENSIONIERT IST
REAR PORTION OF A VEHICLE SIZED FOR IMPACT

(30) Priorité: 12.11.2015 FR 1560835
(43) Date de publication de la demande: 17.05.2017
(73) Titulaire: Renault S.A.S., 92100 Boulogne-Billancourt (FR)
(72) Inventeur: VEUILLOT, OLIVIER, 28300 BERCHERES SAINT GERMAIN (FR); MICHEL, LIONEL, 78180 MONTIGNY LE BRETONNEUX (FR)

(56) Documents cités:
- EP-A1- 0 950 828
- EP-A2- 1 065 108
- WO-A1-2009/006142
- DE-A1-102014 104 003
- US-A1- 2003 211 311

## Description

L'invention se rapporte à une partie arrière de véhicule dimensionnée pour le choc.

Une tendance actuelle est que les constructeurs automobiles cherchent à limiter la vulnérabilité de leurs véhicules en cas de choc à faible vitesse. Ces chocs, dits « petits chocs », correspondent par exemple à des impacts se produisant dans la vie courante lors de manoeuvres de stationnement à des vitesses faibles, de l'ordre de 4 km/h.

Lors de ces petits chocs, limiter la vulnérabilité du véhicule consiste essentiellement à réduire l'endommagement du véhicule et donc les coûts de réparation associés. L'objectif est donc de préserver l'intégrité de la structure de la caisse, des fonctions éclairantes, du moteur et des ouvrants.

A l'arrière du véhicule, se trouve généralement une traverse métallique ou en plastique, placée entre la caisse et un bouclier arrière, pour absorber l'énergie lors de la survenue de ces petits chocs. Pour être efficace, cette traverse doit être placée au plus près de ce bouclier, pour limiter l'intrusion dans le véhicule de l'obstacle extérieur contre lequel est entré en collision le véhicule.

Une première solution permettant de limiter la distance entre la traverse et le bouclier consiste à rapprocher la traverse dudit bouclier arrière, en adaptant la forme de cette traverse au galbe particulier de ce bouclier, qui est souvent différent d'un véhicule à l'autre. Une telle solution impliquerait donc de fabriquer une traverse spécifique pour chaque modèle de véhicule rencontré, et occasionnerait inévitablement des coûts de fabrication supplémentaires associés à chaque différent type de traverse fabriqué.

Une autre solution consisterait à interposer des pièces d'amortissement rapportées, entre la traverse et le bouclier. Cette solution nécessiterait la fabrication de pièces supplémentaires et leurs implantations sur le véhicule, qui sont des opérations consommatrices de temps et qui sont onéreuses.

Une partie arrière de véhicule selon l'invention dispose d'un dispositif d'amortissement de petits chocs, qui s'affranchit des inconvénients relevés dans l'état de la technique. La publication WO 2009/006142 A1 divulgue une partie arrière de véhicule, d'après le préambule de la revendication 1.

L'invention a pour objet une partie arrière de véhicule comprenant une peau de bouclier, une jupe de bouclier et une traverse arrière placée devant ladite peau de bouclier.

La principale caractéristique d'une partie arrière de véhicule selon l'invention est que la jupe est prolongée par au moins un absorbeur qui s'interpose entre la peau de bouclier et la traverse, ledit absorbeur étant doté d'au moins une nervure qui saille vers ladite traverse. De cette manière, la nervure constitue pour l'absorbeur une extension de matière qui a pour but de réduire la distance entre l'absorbeur et la traverse. La réduction de la distance entre chaque absorbeur et la traverse arrière permet donc de réduire l'intrusion de l'obstacle extérieur dans le véhicule et donc de limiter l'endommagement de la partie arrière du véhicule. L'absorbeur peut constituer une pièce ajoutée à la jupe ou former avec elle une seule et même pièce fabriquée lors d'une même opération. Une nervure est une excroissance de matière fine, pouvant revêtir toute forme et être par exemple constitué d'un segment rectiligne ou d'un segment courbe. Chaque absorbeur peut également comprendre un réseau de nervures pouvant être parallèles ou pouvant s'entrecroiser. Préférentiellement, chaque nervure est réalisée dans le même matériau que celui de l'absorbeur.

Avantageusement, chaque absorbeur et la jupe constituent une pièce monolithique commune. Autrement dit, ils sont constitués d'un même matériau et sont fabriqués lors d'une même opération.

De façon préférentielle, la jupe est située au niveau d'une zone inférieure de la peau de bouclier, chaque absorbeur émergeant d'un bord supérieur de la jupe et étant plaqué contre une face avant de ladite peau de bouclier. Une partie de la jupe et chaque absorbeur constituent une surépaisseur pour la peau de bouclier, et viennent donc renforcer ladite peau pour réduire l'impact d'un choc accidentel de la partie arrière du véhicule sur un obstacle extérieur, tel que par exemple un véhicule. Il est supposé que la peau de bouclier s'étend selon une direction transversale du véhicule et possède donc une face avant et une face arrière.

Préférentiellement, une partie arrière de véhicule selon l'invention, comprend deux absorbeurs placés de façon symétrique par rapport à un axe longitudinal et central du véhicule. De cette manière, la présence de ces deux absorbeurs dans des positions symétriques permet d'homogénéiser la répartition des efforts au sein de la partie arrière du véhicule lors d'un choc, et donc de limiter d'endommagement de ladite partie arrière. De plus, cette disposition particulière des absorbeurs permet d'épargner la zone centrale de la partie arrière du véhicule vis-à-vis d'un choc, en empêchant un impact direct sur ladite zone centrale de la partie arrière du véhicule, qui pourrait conduire à une rupture de ladite zone centrale.

Chaque absorbeur comprend au moins un cadre, les bords délimitant ledit cadre constituant les nervures saillant vers la traverse. Le cadre peut par exemple avoir une forme carrée, rectangulaire ou cylindrique. Le cadre possède un bord fermé, délimitant un espace interne.

Chaque absorbeur est allongé selon un axe transversal du véhicule, ledit absorbeur comprenant trois cadres alignés le long dudit axe et au contact les uns des autres. De cette manière, les trois cadres d'un absorbeur sont répartis le long d'un axe transversal du véhicule

Chaque absorbeur comprend un cadre central encadré par un cadre externe et par un cadre interne, ledit cadre interne étant situé du côté d'axe longitudinal et central du véhicule, l'épaisseur des nervures délimitant le cadre interne étant inférieure à celle des nervures délimitant le cadre central et le cadre externe. Le cadre interne se retrouve placé à proximité d'un axe longitudinal et central du véhicule et le cadre externe constitue le cadre le plus éloigné dudit axe longitudinal et central. De cette manière, en étant plus fines, les nervures délimitant le cadre interne sont moins robustes que celles délimitant le cadre central et le cadre externe. Les nervures saillantes délimitant le cadre central et le cadre externe ont la même épaisseur, qui est supérieure à l'épaisseur des nervures délimitant le cadre interne.

Préférentiellement, le rapport entre l'épaisseur des nervures du cadre central ou du cadre externe, et l'épaisseur des nervures du cadre interne est compris entre 1 et 2.

De façon avantageuse, chaque absorbeur comprend des nervures horizontales et des nervures verticales.

Avantageusement, les nervures verticales ont une épaisseur progressive croissant de leurs extrémités supérieures vers leurs extrémités inférieures.

Une partie arrière de véhicule selon l'invention présente l'avantage d'être dimensionnée pour pouvoir résister efficacement à un petit choc, en limitant voire en éliminant son endommagement, grâce à des moyens faciles et rapides à mettre en oeuvre, et peu encombrants. Elle a de plus l'avantage de s'appuyer sur des absorbeurs existants, limitant ainsi les modifications à lui apporter, et réduisant ainsi son temps de fabrication et les coûts de fabrication associés.

On donne ci-après, une description détaillée d'une partie arrière de véhicule selon l'invention, en se référant aux figures suivantes :
- La figure 1 est une vue en perspective de l'arrière d'une peau de bouclier et d'une jupe d'une partie arrière de véhicule selon l'invention,
- La figure 2 est une vue en perspective de l'avant d'une peau de bouclier et d'une jupe d'une partie arrière de véhicule selon l'invention,
- La figure 3 est une vue agrandie d'une face avant d'une peau de bouclier et d'une jupe d'une partie arrière de véhicule selon l'invention, montrant notamment les absorbeurs de ladite jupe,
- La figure 4 est une vue en perspective d'une face avant d'une jupe d'une partie arrière de véhicule selon l'invention, montrant notamment des absorbeurs de ladite jupe,
- La figure 5A est une vue schématique de côté d'une partie arrière de véhicule selon l'invention, montrant notamment la position des absorbeurs par rapport à une traverse arrière,
- La figure 5B est une vue schématique de dessus de la partie arrière de véhicule de la figure 5A,
- Les figures 6A, 6B et 6C sont trois vues schématiques de côté d'une partie arrière de véhicule selon l'invention, montrant l'évolution de ladite partie arrière, respectivement en début, au milieu et en fin d'un choc arrière du véhicule.

La description détaillée est effectuée à partir d'un référentiel lié au véhicule, et pour lequel l'axe X est un axe longitudinal du véhicule orienté vers l'arrière, l'axe Y est un axe transversal du véhicule orienté vers la droite et l'axe Z est un axe vertical orienté vers le haut.

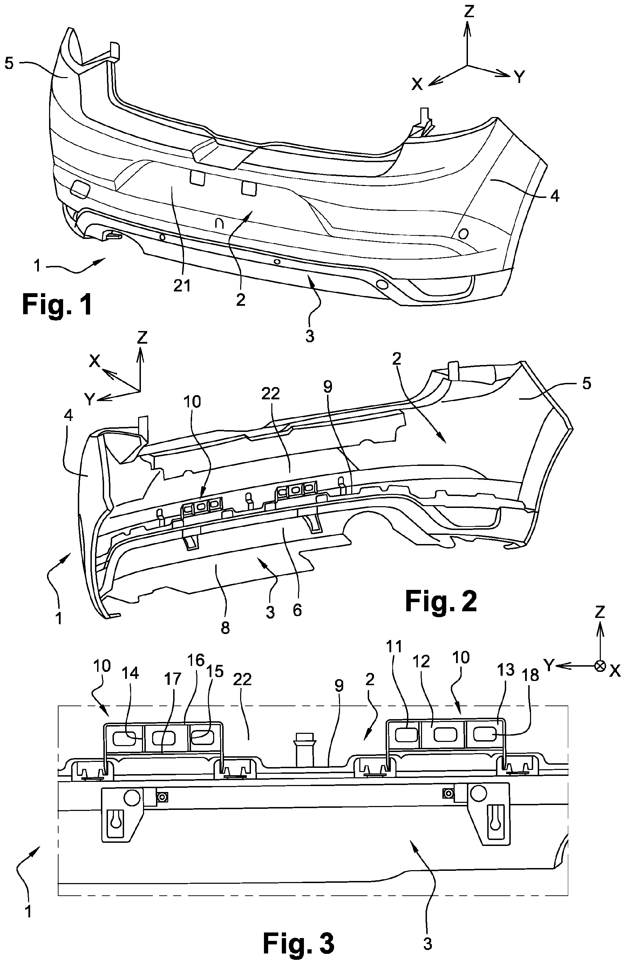

En se référant aux figures 1 et 2, une partie arrière 1 de véhicule selon l'invention comprend une peau de bouclier 2 et une jupe 3. Cette peau de bouclier 2 est assimilable à une coque en plastique de faible épaisseur, s'étendant selon une direction transversale Y du véhicule et possédant deux extrémités repliées 4, 5, s'étendant chacune selon une direction longitudinale X du véhicule. La peau de bouclier 2 possède une surface externe 21 visible depuis l'extérieur du véhicule, et une surface interne 22 non visible. La jupe 3 est une pièce en plastique de faible épaisseur située au niveau d'une zone inférieure de la peau de bouclier 2.

En se référant à la figure 2, la jupe 3 possède une première paroi 6 allongée, qui s'étend selon une direction transversale Y du véhicule et qui vient tapisser partiellement la surface interne 22 de la peau de bouclier 2. Autrement dit, cette première paroi 6 est plaquée contre la surface interne 22 de la peau de bouclier 2 et se retrouve donc devant ladite peau 2. La jupe 3 possède également une deuxième paroi 8 s'étendant également selon une direction transversale Y du véhicule, ladite deuxième paroi 8 étant reliée à ladite première paroi 6 et faisant un angle avec celle-ci. Autrement dit, de façon schématique, la première paroi 6 s'étend dans un plan sensiblement vertical à plus ou moins 10°, et la deuxième paroi 8 est située sous la première paroi 6 et s'étend dans un plan sensiblement horizontal à plus ou moins 20°.

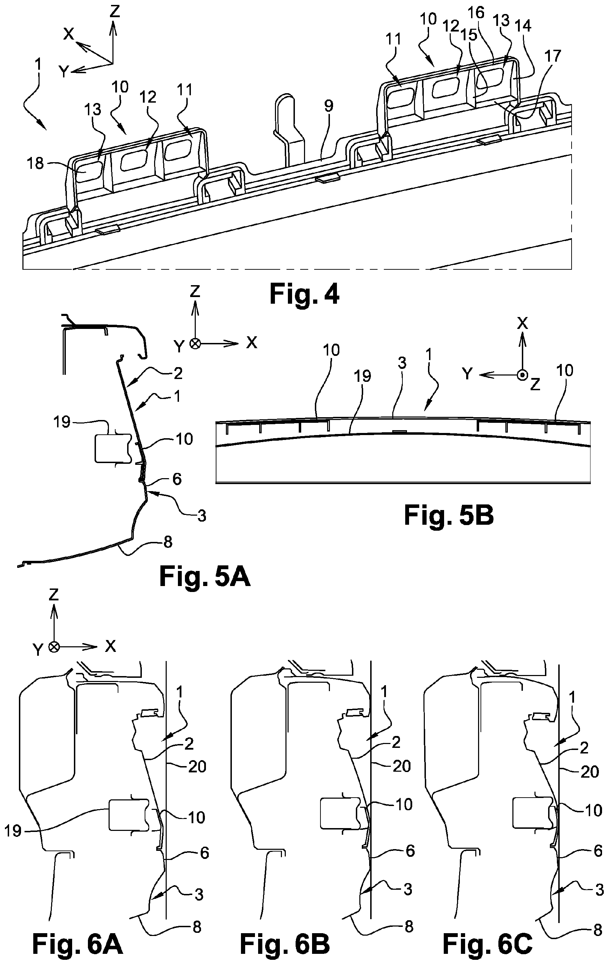

En se référant aux figures 3 et 4, la première paroi 6 de la jupe possède un bord supérieur 9 sensiblement horizontal duquel émergent vers le haut, deux absorbeurs 10. Les deux absorbeurs 10 occupent deux positions symétriques par rapport à un axe longitudinal et central du véhicule. Chaque absorbeur 10 est allongé selon un axe transversal Y du véhicule et comprend trois cadres 11, 12, 13 alignés le long de son axe longitudinal et au contact les uns des autres. Ainsi, chaque absorbeur 10 comprend un cadre central 12 entouré par un cadre interne 11 et par un cadre externe 13, ledit cadre interne 11 constituant le cadre le plus proche d'un axe longitudinal X et central du véhicule et le cadre externe 13 constituant le cadre le plus éloigné dudit axe. Chaque cadre d'un absorbeur 10 est délimité par un bord horizontal supérieur 16, par un bord horizontal inférieur 17 et par deux bords latéraux verticaux 14, 15 joignant les extrémités desdits bords horizontaux 16, 17. Le cadre central 12 est au contact du cadre interne 11 et du cadre externe 13, et possède un bord latéral vertical 14, 15 commun avec ledit cadre interne 11 et avec ledit cadre externe 13. Les trois cadres 11, 12, 13 possèdent chacun une ouverture centrale 18. Pour un cadre donné, les deux bords horizontaux 16, 17 et les deux bords verticaux constituent des nervures saillantes. L'épaisseur des quatre bords délimitant le cadre interne 11 est réduite par rapport à l'épaisseur des bords délimitant le cadre central 12 et le cadre externe 13. Autrement dit, le cadre externe 13 est délimité par quatre bords épais, le cadre interne 11 est délimité par quatre bords fins, et le cadre central 12 est délimité par deux bords horizontaux épais, par un bord latéral vertical fin, qu'il possède en commun avec le cadre interne 11, et par un bord latéral vertical épais, qu'il possède en commun avec le cadre externe 13. Les nervures du cadre interne sont plus fragiles que celles délimitant le cadre externe et le cadre central.

En se référant aux figures 5A et 5B, une partie arrière 1 de véhicule selon l'invention comprend une traverse arrière 19 s'étendant selon une direction transversale Y et horizontale du véhicule. La traverse 19 est assimilable à une barre placée juste devant la peau 2 de bouclier et qui est dimensionnée pour stopper l'intrusion d'un obstacle extérieur 20 dans la partie arrière 1 du véhicule, dans le cas d'un choc de ladite partie 1 avec ledit obstacle. Les absorbeurs 10 de la jupe 3 émergent de ladite jupe 3 de manière à s'interposer entre la traverse arrière 19 et la peau 2 de bouclier. Les nervures représentées par les bords des cadres 11, 12, 13 constituant les absorbeurs 10, saillent desdits absorbeurs 10 en direction de la traverse 19 de manière à réduire la distance séparant les absorbeurs 10 de ladite traverse 19. De cette manière, dans le cas d'un choc de la partie arrière 1 du véhicule contre un obstacle extérieur 20, les absorbeurs 10 vont intervenir très tôt dans le processus de déformation de la peau de bouclier 2, pour limiter la course de ladite peau 2 dans le véhicule sous l'effet dudit choc.

En effet, en se référant à la figure 6A, juste avant le choc contre l'obstacle extérieur arrière 20, les absorbeurs 10 de la jupe 3 sont placés à une distance raccourcie de la traverse arrière 19.

En se référant à la figure 6B, dès que survient le choc, les nervures 14, 15, 16, 17 des absorbeurs 10 se retrouvent immédiatement au contact de la traverse arrière 19 et commencent à se comprimer alors que la partie arrière 1 du véhicule s'est légèrement avancée sous l'effet du choc.

En se référant à la figure 6C, en fin de choc, grâce à la présence des nervures 14, 15, 16, 17 sur les absorbeurs 10, la partie arrière 1 du véhicule ne s'est quasiment pas déformée. Il n'est alors nullement besoin de procéder à une quelconque intervention sur ladite partie arrière 1 pour la restaurer. La structure particulière des absorbeurs 10 avec les nervures 14, 15, 16, 17 a permis de sauvegarder la partie arrière 1 du véhicule, dans le cas d'un petit choc contre un obstacle extérieur 20 pouvant par exemple être un autre véhicule.

## Revendications

1. Partie arrière (1) de véhicule comprenant une peau (2) de bouclier, une jupe (3) de bouclier et une traverse (19) arrière placée devant ladite peau (2) de bouclier, la jupe (3) étant prolongée par au moins un absorbeur (10) qui s'interpose entre la peau (2) de bouclier et la traverse (19), et ledit absorbeur (10) étant doté d'au moins une nervure (14, 15, 16, 17) qui saille vers ladite traverse (19), chaque absorbeur (10) comprenant au moins un cadre (11, 12, 13), les bords (14, 15, 16, 17) délimitant ledit cadre (11, 12, 13) constituent les nervures saillant vers la traverse (19), **caractérisée en ce que** chaque absorbeur 10) est allongé selon un axe transversal du véhicule, et **en ce qu'**il comprend trois cadres (11, 12, 13) alignés le long dudit axe et au contact les uns des autres, chaque absorbeur (10) comprenant un cadre central (12) encadré par un cadre externe (13) et par un cadre interne (11), ledit cadre interne (11) étant situé le plus proche d'un axe longitudinal et central du véhicule, et **en ce que** l'épaisseur des nervures (14, 15, 16, 17) délimitant le cadre interne (11) est inférieure à celle des nervures (14, 15, 16, 17) délimitant le cadre central (12) et le cadre externe (13).

2. Partie arrière selon la revendication 1, **caractérisée en ce que** chaque absorbeur (10) et la jupe (3) constituent une pièce monolithique commune.

3. Partie arrière de véhicule selon l'une quelconque des revendications 1 ou 2, **caractérisée** en que la jupe (3) est située au niveau d'une zone inférieure de la peau (2) de bouclier, et en ce que chaque absorbeur (10) émerge d'un bord supérieur (9) de la jupe (3) et est plaqué contre une face avant (22) de ladite peau (2) de bouclier.

4. Partie arrière de véhicule selon l'une quelconque des revendications 1 à 3, **caractérisée en ce qu'**elle comprend deux absorbeurs (10) placés de façon symétrique par rapport à un axe longitudinal et central du véhicule.

5. Partie arrière de véhicule selon l'une quelconque des revendications précédentes, **caractérisé en ce que** le rapport entre l'épaisseur des nervures (14, 15, 16, 17) du cadre central (12) ou du cadre externe (13), et l'épaisseur des nervures (14, 15, 16, 17) du cadre interne (11) est compris entre 1 et 2.

6. Partie arrière de véhicule selon l'une quelconque des revendications précédentes, **caractérisée en ce que** chaque absorbeur (10) comprend des nervures horizontales (16, 17) et des nervures verticales (14, 15).

7. Partie arrière de véhicule selon la revendication 6, **caractérisée en ce que** les nervures verticales (14, 15) ont une épaisseur progressive croissant de leurs extrémités supérieures vers leurs extrémités inférieures.

## Patentansprüche

1. Heckteil (1) eines Fahrzeugs, das eine Stoßfängerschale (2), eine Stoßfängerschürze (3) und einen hinteren Querträger (19) enthält, der vor der Stoßfängerschale (2) angeordnet ist, wobei die Schürze (3) durch mindestens einen Absorber (10) verlängert wird, der sich zwischen die Stoßfängerschale (2) und den Querträger (19) einfügt, und der Absorber (10) mit mindestens einer Rippe (14, 15, 16, 17) versehen ist, die zum Querträger (19) vorsteht, wobei jeder Absorber (10) mindestens einen Rahmen (11, 12, 13) enthält, wobei die den Rahmen (11, 12, 13) begrenzenden Ränder (14, 15, 16, 17) die zum Querträger (19) vorstehenden Rippen bilden, **dadurch gekennzeichnet, dass** jeder Absorber (10) sich gemäß einer Querachse des Fahrzeugs erstreckt, und dass er drei Rahmen (11, 12, 13) enthält, die entlang der Achse ausgerichtet und miteinander in Kontakt sind, wobei jeder Absorber (10) einen mittleren Rahmen (12) enthält, der von einem äußeren Rahmen (13) und von einem inneren Rahmen (11) umrahmt wird, wobei der innere Rahmen (11) sich einer Längs- und Mittelachse des Fahrzeugs am nächsten befindet, und dass die Dicke der den inneren Rahmen (11) begrenzenden Rippen (14, 15, 16, 17) geringer ist als diejenige der den mittleren Rahmen (17) und den äußeren Rahmen (13) begrenzenden Rippen (14, 15, 16, 17).

2. Heckteil nach Anspruch 1, **dadurch gekennzeichnet, dass** jeder Absorber (10) und die Schürze (3) ein gemeinsames monolithisches Bauteil bilden.

3. Heckteil eines Fahrzeugs nach einem der Ansprüche 1 oder 2, **dadurch gekennzeichnet, dass** die Schürze (3) sich im Bereich einer unteren Zone der Stoßfängerschale (2) befindet, und dass jeder Absorber (10) aus einem oberen Rand (9) der Schürze (3) austritt und gegen eine Vorderseite (22) der Stoßfängerschale (2) gedrückt ist.

4. Heckteil eines Fahrzeugs nach einem der Ansprüche 1 bis 3, **dadurch gekennzeichnet, dass** es zwei Absorber (10) enthält, die bezüglich einer Längs- und Mittelachse des Fahrzeugs symmetrisch angeordnet sind.

5. Heckteil eines Fahrzeugs nach einem der vorhergehenden Ansprüche, **dadurch gekennzeichnet, dass** das Verhältnis zwischen der Dicke der Rippen (14, 15, 16, 17) des mittleren Rahmens (12) oder des äußeren Rahmens (13) und der Dicke der Rippen (14, 15, 16, 17) des inneren Rahmens (11) zwischen 1 und 2 liegt.

6. Heckteil eines Fahrzeugs nach einem der vorhergehenden Ansprüche, **dadurch gekennzeichnet, dass** jeder Absorber (10) waagrechte Rippen (16, 17) und senkrechte Rippen (14, 15) enthält.

7. Heckteil eines Fahrzeugs nach Anspruch 6, **dadurch gekennzeichnet, dass** die senkrechten Rippen (14, 15) eine progressive Dicke haben, die von ihren oberen Enden zu ihren unteren Enden zunimmt.

## Claims

1. Vehicle rear portion (1) comprising a bumper skin (2), a bumper skirt (3) and a rear crossmember (19) placed in front of said bumper skin (2), the skirt (3) being extended by at least one absorber (10) which is interposed between the bumper skin (2) and the crossmember (19), and said absorber (10) being equipped with at least one rib (14, 15, 16, 17) which projects towards said crossmember (19), each absorber (10) comprising at least one frame (11, 12, 13), the edges (14, 15, 16, 17) delimiting said frame (11, 12, 13) constituting the ribs projecting towards the crossmember (19), **characterized in that** each absorber (10) is elongated along a transverse axis of the vehicle, and **in that** it comprises three frames (11, 12, 13) aligned along said axis and in contact with one another, each absorber (10) comprising a central frame (12) framed by an outer frame (13) and by an inner frame (11), said inner frame (11) being situated the closest to a longitudinal and central axis of the vehicle, and **in that** the thickness of the ribs (14, 15, 16, 17) delimiting the inner frame (11) is less than that of the ribs (14, 15, 16, 17) delimiting the central frame (12) and the outer frame (13) .

2. Rear portion according to Claim 1, **characterized in that** each absorber (10) and the skirt (3) constitute a common monolithic part.

3. Vehicle rear portion according to either one of Claims 1 and 2, **characterized in that** the skirt (3) is situated at a lower region of the bumper skin (2), and **in that** each absorber (10) emerges from an upper edge (9) of the skirt (3) and is pressed against a front face (22) of said bumper skin (2).

4. Vehicle rear portion according to any one of Claims 1 to 3, **characterized in that** it comprises two absorbers (10) placed symmetrically with respect to a longitudinal and central axis of the vehicle.

5. Vehicle rear portion according to any one of the preceding claims, **characterized in that** the ratio between the thickness of the ribs (14, 15, 16, 17) of the central frame (12) or of the outer frame (13) and the thickness of the ribs (14, 15, 16, 17) of the inner frame (11) is between 1 and 2.

6. Vehicle rear portion according to any one of the preceding claims, **characterized in that** each absorber (10) comprises horizontal ribs (16, 17) and vertical ribs (14, 15).

7. Vehicle rear portion according to Claim 6, **characterized in that** the vertical ribs (14, 15) have a progressive thickness increasing from their upper ends towards their lower ends.
